(19) 

Europäisches
Patentamt
European
Patent Office
Office européen
des brevets

(11) **EP 3 282 609 A1**

(12) **EUROPEAN PATENT APPLICATION**
published in accordance with Art. 153(4) EPC

(43) Date of publication:
**14.02.2018 Bulletin 2018/07**

(21) Application number: **16776665.8**

(22) Date of filing: **08.04.2016**

(51) Int Cl.:
**H04J 99/00** (2009.01)     **H04B 7/04** (2017.01)
**H04W 16/28** (2009.01)

(86) International application number:
**PCT/JP2016/061492**

(87) International publication number:
**WO 2016/163499 (13.10.2016 Gazette 2016/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **09.04.2015 JP 2015080320**

(71) Applicant: **NTT DOCOMO, INC.
Chiyoda-ku
Tokyo 100-6150 (JP)**

(72) Inventors:
• **BENJEBBOUR, Anass**
  **Tokyo 100-6150 (JP)**
• **SAITOU, Yuuya**
  **Tokyo 100-6150 (JP)**
• **TAKEDA, Kazuaki**
  **Tokyo 100-6150 (JP)**
• **KISHIYAMA, Yoshihisa**
  **Tokyo 100-6150 (JP)**

(74) Representative: **Hoffmann Eitle
Patent- und Rechtsanwälte PartmbB
Arabellastraße 30
81925 München (DE)**

(54) **RADIO BASE STATION, USER TERMINAL, RADIO COMMUNICATION SYSTEM AND RADIO COMMUNICATION METHOD**

(57)     To suppress deterioration of reception characteristics of a user terminal even in the case where a radio base station performs power multiplexing on downlink MIMO signals to transmit, a radio base station according to one aspect of the present invention has a transmission section that performs power multiplexing on downlink signals to a plurality of user terminals each having a MIMO (Multiple-Input Multiple-Output) configuration to transmit, and a control section that controls a PMI (Precoding Matrix Indicator) and/or an RI (Rank Indicator) applied to the downlink signals, where the transmission section transmits information on the PMI and/or the RI of another user terminal subjected to power multiplexing to a predetermined user terminal.

FIG. 5

EP 3 282 609 A1

**Description**

Technical Field

The present invention relates to a radio base station, user terminal, radio communication system and radio communication method in the next-generation mobile communication system.

Background Art

In UMTS (Universal Mobile Telecommunications System) networks, for the purpose of higher data rates, low delay and the like, Long Term Evolution (LTE) has been specified (Non-patent Document 1). Then, for the purpose of wider bands and higher speed than LTE, a successor system called LTE-Advanced (also called LTE-A) to LTE has been studied and specified as LTE Rel. 10-12.

Further, in the future radio communication systems (from LTE Rel. 13 onward), as an allocation scheme of downlink radio resources, it has been studied using Non-Orthogonal Multiple Access (NOMA) based on the premise of interference cancellation on the reception side, in addition to conventional OFDMA (Orthogonal Frequency Division Multiple Access).

Citation List

Non-Patent Literature

[Non-patent Literature 1] 3GPP TS 36.300 "Evolved Universal Terrestrial Radio Access (E-UTRA) and Evolved Universal Terrestrial Radio Access Network (E-UTRAN); Overall description; Stage 2"

Summary of Invention

Technical Problem

In NOMA, downlink signals (OFDMA signals) to a plurality of user terminals are superposed on the same radio resources. Each of the downlink signals is corrected for amplification corresponding to a predetermined transmit power ratio, is multiplexed (power-multiplexed) in the power domain, and is transmitted. A user terminal on the reception side processes the downlink signal by a signal separation method such as Successive Interference Cancellation (SIC), thereby separates signals to the other user terminals, and is capable of extracting a signal to the user terminal.

Further, by combining MIMO (Multiple-Input Multiple-Output) and NOMA to use, it is possible to perform power multiplexing on signals of a plurality of layers, and it is possible to further improve spectral usage efficiency. However, in the case of combining NOMA and MIMO to use, there is a case where a downlink signal to some UE, which has conventionally not been an interference source, is an interference signal to another UE. In this case, there is a problem that the communication quality degrades with deterioration of reception characteristics of the downlink signal.

The present invention was made in view of such a respect, and it is an object of the invention to provide a radio base station, user terminal, radio communication system and radio communication method for enabling deterioration of reception characteristics of a user terminal to be suppressed, even in the case where a radio base station performs power multiplexing on downlink MIMO signals to transmit.

Solution to Problem

A radio base station according to one aspect of the present invention is characterized by having a transmission section that performs power multiplexing on downlink signals to a plurality of user terminals each having a MIMO (Multiple-Input Multiple-Output) configuration to transmit, and a control section that controls a PMI (Precoding Matrix Indicator) and/or an RI (Rank Indicator) applied to the downlink signals, where the transmission section transmits information on the PMI and/or the RI of another user terminal to a predetermined user terminal.

Advantageous Effects of Invention

According to the present invention, it is possible to suppress deterioration of reception characteristics of a user terminal, even in the case where a radio base station performs power multiplexing on downlink MIMO signals to transmit.

Brief Description of Drawings

FIG. 1 is a schematic explanatory diagram of NOMA;
FIG. 2 is a diagram showing one example of a configuration of a radio base station;
FIG. 3 contains diagrams showing one example of configurations of user terminals;
FIG. 4 is an explanatory diagram of the problem in the case of combining NOMA and MIMO to use;
FIG. 5 is an explanatory diagram of NOMA according to one Embodiment of the present invention;
FIG. 6 is a diagram showing one example of a user terminal according to one Embodiment of the invention;
FIG. 7 is a diagram showing one example of notification information sets according to one Embodiment of the invention;
FIG. 8 is another diagram showing one example of notification information sets according to one Embodiment of the invention;
FIG. 9 contains diagrams showing one example of tables according to one Embodiment of the invention;
FIG. 10 is a diagram showing one example of a schematic configuration of a radio communication system according to one Embodiment of the invention;
FIG. 11 is a diagram showing one example of an entire configuration of a radio base station according to one Embodiment of the invention;
FIG. 12 is a diagram showing one example of a function configuration of the radio base station according to one Embodiment of the invention;
FIG. 13 is a diagram showing one example of an entire configuration of a user terminal according to one Embodiment of the invention; and
FIG. 14 is a diagram showing one example of a function configuration of the user terminal according to one Embodiment of the invention.

Description of Embodiments

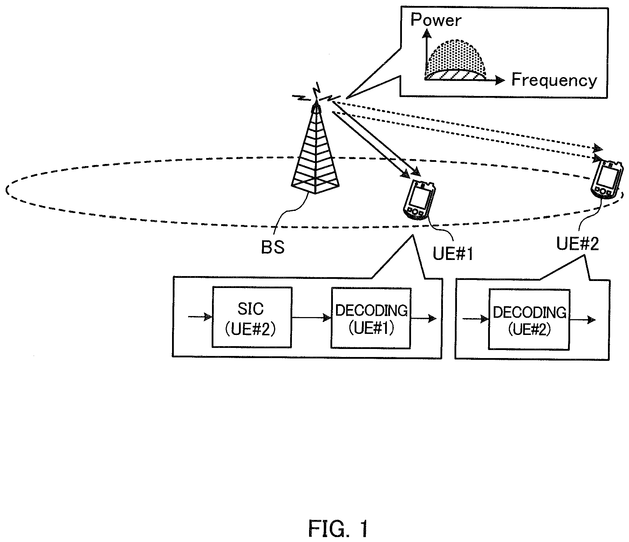

FIG. 1 is a schematic explanatory diagram of NOMA. FIG. 1 illustrates the case where a radio base station BS transmits downlink signals to a plurality of user terminals UEs by NOMA.

FIG. 1 illustrates the case where a user terminal UE#1 is positioned near the radio base station BS, and a user terminal UE#2 is positioned far away from the radio base station BS inside a coverage area of the radio base station BS (eNB). Herein, signals of the user terminal UE#1 and user terminal UE#2 are power-multiplexed into downlink signals transmitted from the radio base station BS.

A path loss of the downlink signal to each of the user terminals UE#1 and UE#2 from the radio base station BS increases, as the distance from the radio base station BS increases. Therefore, a received SINR (Signal to Interference plus Noise Ratio) of the user terminal UE#2 far from the radio base station BS is lower than a received SINR of the user terminal UE#1 near the radio base station BS.

In NOMA, by varying transmit power corresponding to channel gain (e.g. received SINR, RSRP (Reference Signal Received Power), path loss and the like, downlink signals of a plurality of user terminals UEs are non-orthogonally multiplexed into the same radio resources. For example, in FIG. 1, downlink signals to the user terminals UE#1 and UE#2 are multiplexed into the same radio resources with different transmit power. Relatively low transmit power is allocated to the downlink signal to the user terminal UE#1 with a high received SINR, and relatively high transmit power is allocated to the downlink signal to the user terminal UE#2 with a low received SINR.

Further, in NOMA, for example, by removing an interference signal from a received signal by SIC that is a successive interference cancellation type signal separation method, a downlink signal to the terminal is extracted. Among downlink signals non-orthogonally multiplexed into the same radio resources, the interference signal is a downlink signal to another terminal with higher transmit power than that of the terminal. Therefore, by removing the downlink signal to another terminal with higher transmit power than that of the terminal by SIC, the downlink signal to the terminal is extracted.

For example, the downlink signal to the user terminal UE#2 is transmitted with higher transmit power than that of the downlink signal to the user terminal UE#1. Therefore, the user terminal UE#1 near the radio base station BS receives the downlink signal to the user terminal UE#2 non-orthogonally multiplexed into the same radio resources as the interference signal, in addition to the downlink to the UE#1. The user terminal UE#1 removes the downlink signal to the user terminal UE#2 by SIC, and is thereby capable of extracting the downlink signal to the UE#1 to properly decode.

On the other hand, the downlink signal to the user terminal UE#1 is transmitted with lower transmit power than that of the downlink signal to the user terminal UE#2. Therefore, the user terminal UE#2 far from the radio base station BS is capable of neglecting interference by the downlink signal to the user terminal UE#1 non-orthogonally multiplexed into the same radio resources, and is thereby capable of extracting the downlink signal to the UE#2 to properly decode, without performing interference cancellation by SIC.

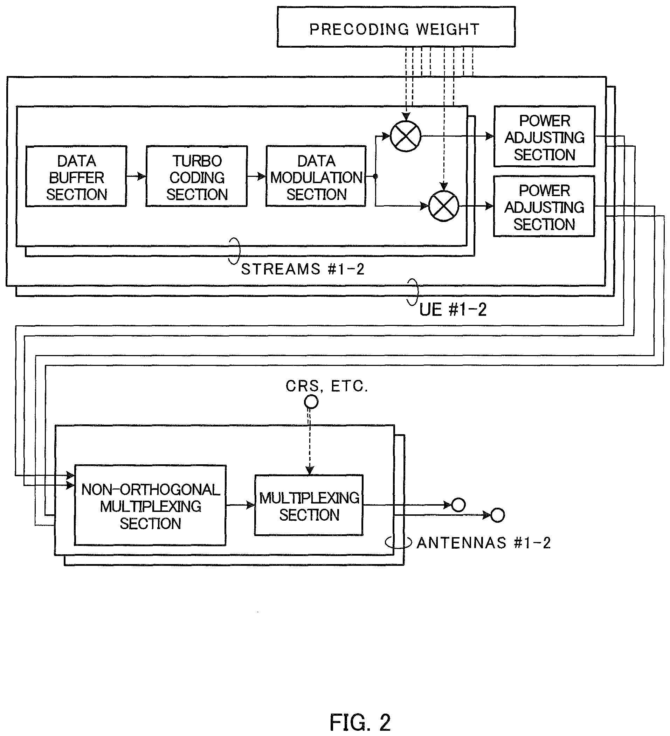

FIG. 2 illustrates one example of a configuration of a transmitter (radio base station BS) for transmitting downlink signals to the user terminals UE#1 and UE#2.

The radio base station according to this Embodiment assumes the case of 2x2 MIMO. Herein, streams #1 and stream #2 represent layers in MIMO. In addition, the following configuration is only illustrative, and different configurations other than the configuration are capable of being applied. For example, also in 4x4 MIMO, configurations may be applied where it is possible to obtain the same effect as in this Embodiment.

For the user terminals UE#1 and UE#2, the radio base station shown in FIG. 2 encodes data to the streams #1 and #2, modulates, and multiplies by precoding weights. Then, the radio base station performs non-orthogonal multiplexing on the modulated signal to each of the user terminals UE#1 and UE#2 subsequent to power adjustment to multiplex with a CRS. The station transmits the multiplexed signal as the downlink signal via a plurality of antennas #1 and #2.

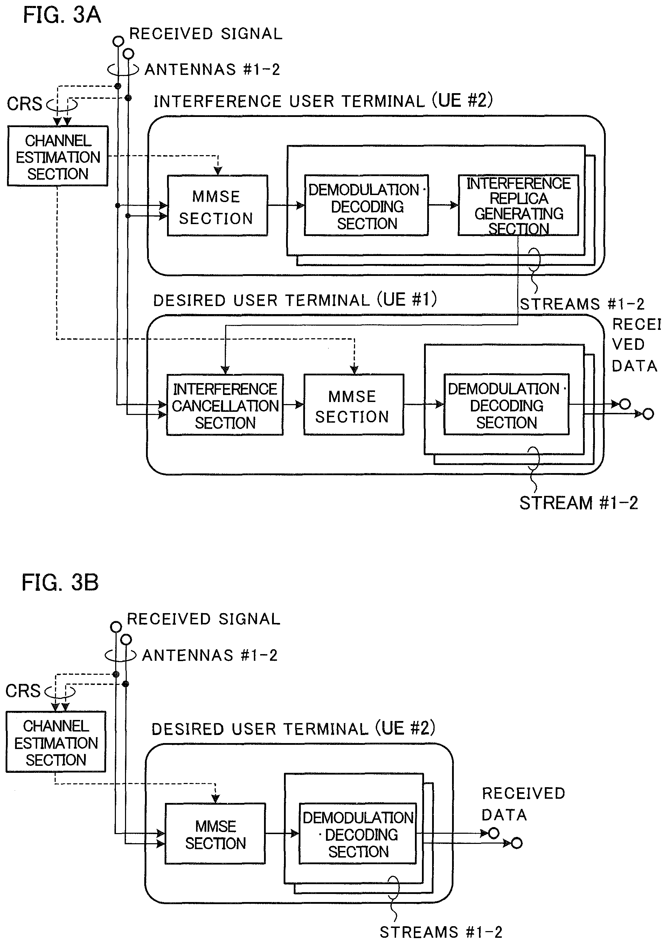

FIG. 3 contains diagrams showing one example of configurations of user terminals. The user terminals (receivers) receive power-multiplexed downlink signals (modulated signals) transmitted from the radio base station shown in FIG. 2. FIG. 3A illustrates a user terminal for properly decoding data (received data) to the terminal from the power-multiplexed modulated signal including information to the terminal, by performing interference cancelation by SIC in an interference cancellation section. FIG. 3B illustrates a user terminal for properly decoding data (received data) to the terminal from the power-multiplexed modulated signal transmitted to the terminal, without performing SIC.

Herein, each of FIGs. 3A and 3B illustrates the configuration of the user terminal according to reception processing, and the user terminal is provided with necessary configurations as well as the configuration. Further, a single user terminal is capable of having the function of the user terminal as shown in FIG. 3B and the function of the user terminal as shown in FIG. 3A, and of performing each function based on a signal to receive.

Further, in this Embodiment, FIG. 3A is a diagram corresponding to reception processing of the user terminal UE#1 of FIG. 1, and FIG. 3B is a diagram corresponding to reception processing of the user terminal UE#2 of FIG. 1.

Referring to FIG. 3A, the user terminal UE#1 for performing interference cancellation (SIC) will be described below. The user terminal UE#1 receives a modulated signal transmitted from the radio base station BS (transmitter). In the received modulated signal (received signal), a modulated signal (hereinafter, described as modulated signal of the UE#1) toward the user terminal (desired user terminal) UE#1, and a modulated signal (hereinafter, described as modulated signal of the UE#2) toward another user terminal (interference user terminal) UE#2 are power multiplexed.

Since the distance from the radio base station BS is different between the user terminals UE#1 and UE#2, in the case where the radio base station performs power multiplexing, the base station performs power multiplexing on modulated signals of the user terminals UE#1 and UE#2 with different (transmit) power ratios. As shown in FIG. 1, the transmit power ratio of a modulated signal to the user terminal UE#1 multiplexed into the modulated signal is smaller than the transmit power ratio of a modulated signal to the user terminal UE#2. Accordingly, in the case of processing without separating the power-multiplexed modulated signal, data of the user terminal UE#1 is not capable of being demodulated or decoded. Therefore, in order for the user terminal UE#1 to extract the data to the user terminal UE#1, the user terminal UE#1 needs to remove the modulated signal of the interference user terminal UE#2 from the power-multiplexed signal.

Accordingly, the user terminal UE#1 estimates the modulated signal of the user terminal UE#2 from the power-multiplexed modulated signal to remove, and thereby extracts the modulated signal of the user terminal UE#1. Specifically, the user terminal UE#1 performs channel estimation using the CRS multiplexed into the received signal. Then, in an MMSE (Minimum Mean Square Error) section, the UE#1 obtains the modulated signal of the user terminal UE#2 from the multiplexed modulated signal and the result of channel estimation by a least square method. Further, the UE#1 demodulates and decodes the modulated signal of the user terminal UE#2 to generate an interference replica.

Using the interference replica of the modulated signal of the user terminal UE#2, the user terminal UE#1 obtains the modulated signal of the user terminal UE#1. Specifically, the user terminal UE#1 removes the interference replica from the power-multiplexed modulated signal, and obtains an interference replica-removed signal in an interference cancellation section. Then, the UE#1 estimates the modulated signal of the user terminal UE#1 from the interference replica-removed signal and the above-mentioned result of channel estimation by the least square method in the MMSE section. By demodulating and decoding the modulated signal, the user terminal UE#1 acquires the data (received data) toward the user terminal UE#1.

Next, referring to FIG. 3B, the user terminal UE#2 that does not perform interference cancellation SIC will be described. The transmit power ratio of the user terminal UE#2 in the power-multiplexed modulated signal is larger than the transmit power ratio of the user terminal UE#1. Therefore, without removing the modulated signal of the user terminal UE#1, the user terminal UE#2 is capable of demodulating and decoding data. Specifically, the user terminal UE#2 performs channel estimation using the CRS multiplexed into the received signal. Then, in an MMSE section, the UE#2 estimates the modulated signal of the user terminal UE#2 prior to power multiplexing, by the least square method based on the result of channel estimation and the power-multiplexed modulated signal (received signal). The UE#2 demodulates and decodes the estimated modulated signal, and thereby acquires data (received data) of the user terminal UE#2.

By this means, each of the user terminals UE#1 and UE#2 is capable of extracting the data to the user terminal from the received signal i.e. power-multiplexed modulated signal.

In this way, in the case of applying NOMA on downlink, it is possible to multiplex downlink signals of a plurality of user terminals, UE#1 and UE#2, into the same radio resources by varying transmit power, and it is thereby possible to improve spectral usage efficiency.

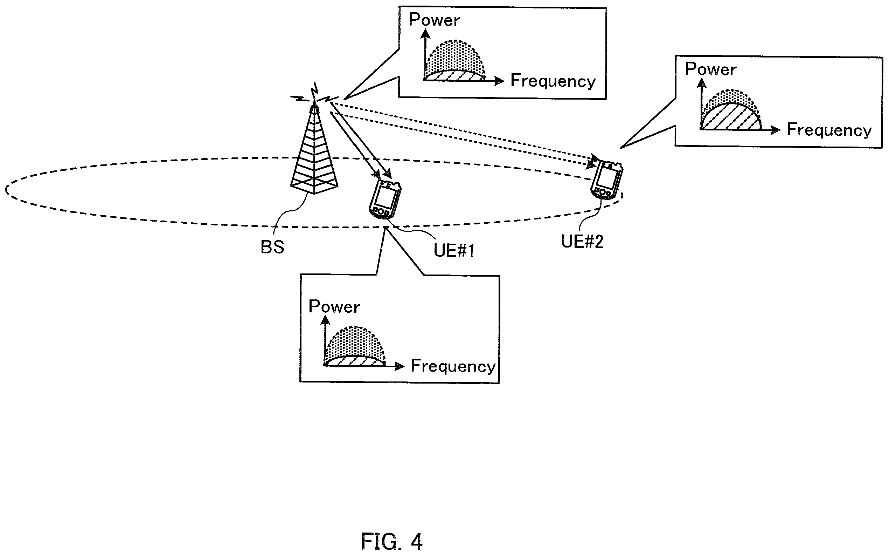

On the other hand, for example, in the case of applying MIMO to the downlink, corresponding to states (channel states) of propagation paths from the radio base station to the user terminals and the like, there is the risk that the power ratio of a plurality of user terminals (signals subsequent to precoding multiplication via MIMO channels) in the downlink signal which is subjected to precoding and is multiplexed varies for each received signal. FIG. 4 shows an explanatory diagram of the problem in the case of combining NOMA and MIMO to use. For example, as shown in FIG. 4, the case is considered that the power ratio of the signal of the user terminal UE#2 is large in the received signal received in the user terminal UE#1, and that the power ratio of the signal of the user terminal UE#1 is large in the received signal received in the user terminal UE#2.

In this case, in the above-mentioned configuration where only the user terminal UE#1 uses SIC, there is the risk that the user terminal UE#2 does properly not acquire the data.

In the case as shown in FIG. 4, as long as there is a configuration where the user terminal UE#2 is capable of removing a signal of another user terminal except the user terminal UE#2, in addition to the user terminal UE#1, the user terminal UE#2 is not capable of acquiring the signal of the user terminal UE#2.

Therefore, the inventors of the present invention conceived that a user terminal is capable of acquiring data to the user terminal, by making a configuration for enabling each user terminal to remove a signal of another user terminal, even in the case that the power ratio of user terminals in each received signal differs in the signal received in each user terminal, with respect to the power-multiplexed downlink signal. Specifically, by making a configuration where a radio base station notifies a predetermined user terminal of information on another user terminal, it is conceived that a user terminal is capable of acquiring data of the user terminal, for example, using SIC. According to one Embodiment of the present invention, by making a configuration where a plurality of user terminals is capable of performing SIC, it is possible to suppress deterioration of reception characteristics, even when the power ratio of a plurality of user terminals of power-multiplexed signals differs in a received signal of each user terminal.

Radio communication methods according to one Embodiment of the present invention will be described below in detail.

In one Embodiment of the present invention, when a plurality of user terminals performs SIC, information on PMIs and/or RIs of both user terminals is notified to both user terminals. Further, when only a single user terminal performs SIC, only the user terminal that performs SIC is notified of the information on PMIs and/or RIs of both user terminals, and a user terminal that does not perform SIC is notified of only information on the PMI and/or the RI of the user terminal that does not perform SIC. The number of user terminals, the PMI and RI (Rank Information) illustrated in one Embodiment of the present invention are shown as an example, and the invention is not limited thereto. As described later, a configuration may be made where necessary information is notified as appropriate as well as the above-mentioned information. Herein, SIC is described as one example of a receiver, and another receiver (Maximum Likelihood Detection: MLD) may be used.

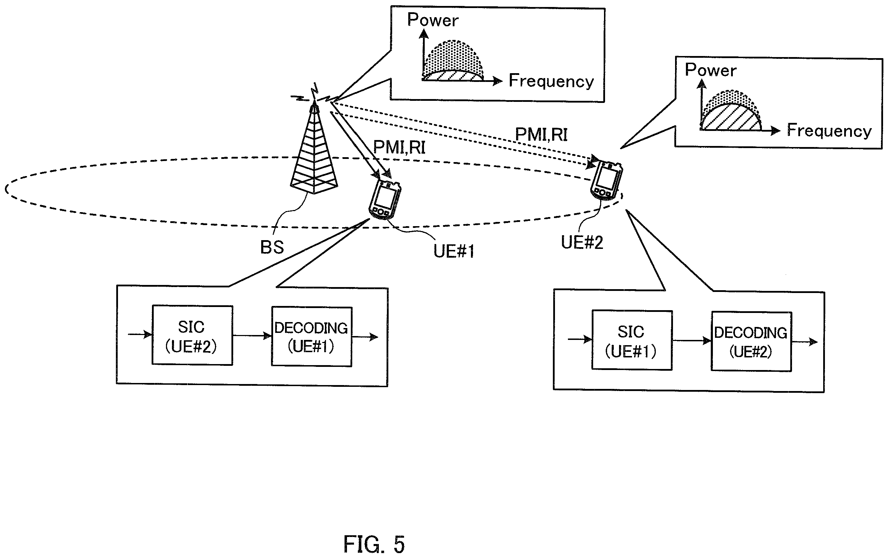

FIG. 5 is an explanatory diagram of NOMA according to one Embodiment (hereinafter, also referred to as this Embodiment) of the present invention.

FIG. 5 illustrates the radio base station BS and user terminals UE#1 and UE#2 in one Embodiment of the present invention. In this Embodiment, in signals received in the user terminals UE#1 and UE#2, a signal of the other user terminal (interference user terminal) is higher than a signal of the user terminal (desired user terminal). Accordingly, in order to acquire the signal of the user terminal, both of the user terminals UE#1 and UE#2 need to perform SIC to remove the signal of the other user terminal.

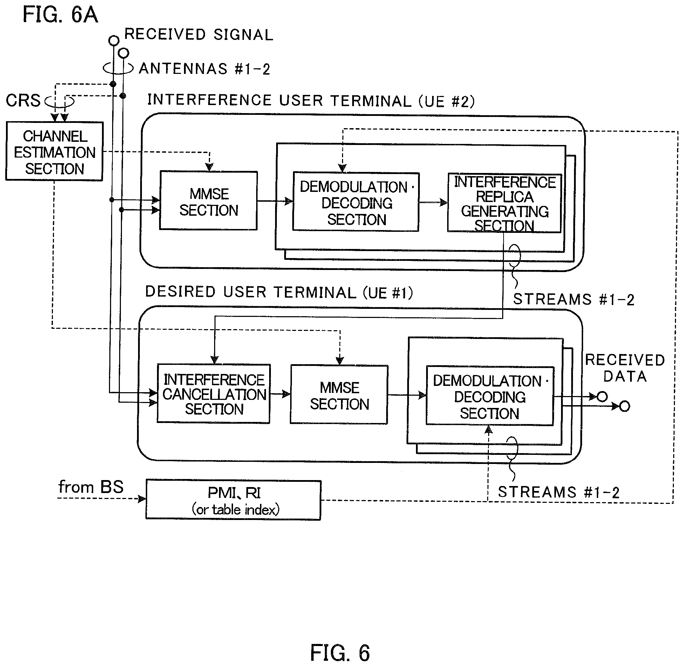

FIG. 6 is a diagram showing one example of the user terminal according to one Embodiment of the present invention. In the user terminal of FIG. 6, a configuration according to reception processing is described, and the user terminal may be provided with necessary configurations as well as the configuration.

In one Embodiment of the present invention, FIG. 6 is a diagram that corresponds to reception processing of the user terminal UE#2 of FIG. 5. Herein, reception processing of the user terminal UE#1 of FIG. 5 is the same as the reception processing of the user terminal UE#2. Further, the user terminal shown in FIG. 5 may be a user terminal having the same configuration, or may be a user terminal having a different configuration. In FIG. 6, operation of the user terminal UE#2 will be described, as a representative of the user terminals UE#1 and UE#2.

The user terminal shown in FIG. 6 will be described below. Conventionally, the user terminal UE#2 disposed far from the radio base station BS has not been configured to be able to perform SIC (see FIG. 3B). Therefore, as shown in FIG. 6, when the power ratio of the other user terminal UE#1 is larger than that of the user terminal UE#2 in the power-multiplexed received signal, since the UE#2 has not acquired information required for SIC, the UE#2 is not capable of applying SIC, and is not capable of decoding the signal of the user terminal UE#2.

On the other hand, the user terminal UE#2 in one Embodiment of the present invention is notified of information (e.g. PMI, RI, etc.) on the other user terminal (user terminal UE#1) from the radio base station, and is thereby allowed to execute SIC. At this point, the user terminal according to one Embodiment of the invention performs SIC on the power-multiplexed received (modulated) signal, and is thereby capable of removing the modulated signal of the user terminal UE#1 that is the interference user terminal, and of acquiring the modulated signal of the user terminal UE#2 that is the desired user terminal.

Thus, in one Embodiment of the invention, by making the configuration where each of a plurality of user terminals is capable of performing SIC, also in the case as shown in FIG. 5, each user terminal is capable of properly acquiring the signal of the user terminal. In other words, even in the case where the power ratio of the other user terminal is higher than the power ratio of the user terminal in the power-multiplexed signal received in each user terminal, the user terminal is capable of properly acquiring the signal of the user terminal.

Further, the number of user terminals to apply SIC, and the method of selecting user terminals to apply SIC are not limited to the methods as described above. Furthermore, user terminals to which SIC is applicable may be fixed, or may be changed as appropriate corresponding to circumstances. For example, user terminals to which SIC is applicable may be different corresponding to the channel state (CSI), PMI and RI. Still furthermore, each user terminal is equipped with an SIC receiver, and may determine whether to apply SIC corresponding to a decoded result of another user terminal. When the signal of another user terminal is first decoded and it is determined that the decoded result is correct, the user terminal performs SIC. When it is determined that the result is not correct, the user terminal does not perform SIC, and directly decodes the signal of the user terminal from the received signal.

(In regard to the received signal)

The modulated signal to multiplex will be described next. Hereinafter, the received signal in one Embodiment of the present invention will be used. In NOMA, for example, a received signal vector Y is expressed by the following equations (1) and (2). The equation (1) corresponds to TM (transmission mode) 3, and the equation (2) corresponds to TM4.

[Mathematics 1]

Equation (1)

$$\mathbf{Y} = \mathbf{H}(\sqrt{P_1}\mathbf{W}\mathbf{X}_1 + \sqrt{P_2}\mathbf{W}\mathbf{X}_2) + \mathbf{N}$$

Equation (2)

$$\mathbf{Y} = \mathbf{H}(\sqrt{P_1}\mathbf{W}_1\mathbf{X}_1 + \sqrt{P_2}\mathbf{W}_2\mathbf{X}_2) + \mathbf{N}$$

Herein, $\mathbf{H}$ represents a channel vector, $\sqrt{P_i}$ represents a transmit power ratio of a UE#i, $\mathbf{W}_i$ represents a transmission signal weight (precoding weight) of the UE#i, $\mathbf{X}_i$ represents a data (transmission signal) vector of the UE#i, $\mathbf{N}$ represents a noise vector, and $\mathbf{Y}$ represents a received signal vector (modulated signal vector). As shown in the equation (1), in the case of TM3, the same weight $\mathbf{W}$ is set on each UE, and in the case of TM4, a different weight $\mathbf{W}_i$ is set on each UE.

Further, multiplication of $\mathbf{H}$ by the first term inside the parenthesis of the right side of each of the equations (1) and (2) represents a modulated signal vector subsequent to precoding weight multiplication of the user terminal UE#1, and multiplication of $\mathbf{H}$ by the second term inside the parenthesis represents a modulated signal vector subsequent to precoding weight multiplication of the user terminal UE#2. Herein, a signal vector obtained by adding the modulated signals of the user terminals UE#1 and UE#2 is transmitted from the transmitter to the receiver.

(Information that the radio base station notifies the user terminal)

Described next is the information that the radio base station notifies the user terminal. As described above, the user terminal in one Embodiment of the present invention requires the information so as to acquire the signal of the user terminal. Further, not being dependent on the state of the received signal into which the user terminal is power-multiplexed, in order to acquire the signal of the user terminal, the user terminal requires also the information on the other user terminal.

In this Embodiment, the radio base station is capable of transmitting a PMI (Precoding Matrix Indicator) and/or an RI (Rank Indicator) to the user terminal. The radio base station is capable of controlling application of the PMI and RI to the downlink signal. Further, when necessary, the radio base station is capable of transmitting information on the PMI and/or the RI of the other user terminal except a predetermined user terminal to the predetermined user terminal. With respect to notification of these pieces of information, for example, whether to use TM3 or TM4, the radio base station may control as appropriate, corresponding to the presence or absence of use of SIC, the presence or absence of a change of the PMI and RI, and the like. The radio base station may be configured to transmit an index associated with the information on the PMI and/or the RI, and thereby notify of the PMI and/or the RI, or may be configured to directly notify of the information. Further, with respect to the PMI and/or the RI, it may be configured to directly notify using the PDCCH (Physical Downlink Control Channel).

In addition, the radio base station may notify a predetermined user terminal of information on the user terminal and information (at least one or more among PMI, RI, MCS and P) on the other user terminal on the PDCCH. Further, the radio base station may notify the predetermined user terminal of identification information (ID Information) of the other user terminal on the PDCCH. In this case, in addition to the information on the user terminal, by performing blind detection, the predetermined user terminal is capable of acquiring the information (at least one or more among PMI, RI, MCS and P) on the other user terminal.

Further, by making a configuration for enabling the Rank number (RI) of the other user terminal to be notified, it is possible to properly perform interference cancellation on the downlink signal, in consideration of the Rank number of the other user terminal, and it is possible to suppress deterioration of reception characteristics of the downlink signal. By thus making, for example, even when the optimal Rank of NOMA varies by a change in radio wave conditions of the communication path on downlink, it is possible to suitably change the Rank of the downlink signal.

The information that the radio base station notifies the user terminal is not limited to the above-mentioned information. For example, the MCS (Modulation Coding Scheme) index) and P (Power ratio index) are considered, in addition thereto. By including the above-mentioned PMI and RI also, the radio base station may be configured to notify the user terminal of information that is selected as appropriate from among these four pieces of information (parameters). With respect to the information, it is considered the case of using the information that the user terminal itself holds, and the case of using the information notified from the radio base station.

Further, in the case where the PMI is a double codebook i.e. the case where the PMI is configured by multiplication of PMI1 applied to a wideband in a long-term, and PMI2 applied to a sub-band in a short-time, joint encoding described below may be performed. In this case, for example, the PMI1 and the other wideband related information (e.g. MCS) may be subjected to joint encoding to be notified. Further, the PMI2 and the other sub-band related information (e.g. power) may be subjected to joint encoding for each sub-band to be notified.

When the radio base station selects the information from among the MCS, P, PMI and RI to notify the user terminal, the radio base station may directly notify of these pieces of information, or may indirectly notify of these pieces of information. For example, when the radio base station notifies of the PMI (Precoder), the radio base station may use a PMI (Codebook based precoder) determined with the codebook, or may use a PMI (Non-codebook Based precoder) that is not dependent on the codebook.

With respect to parameters to transmit, when necessary, the radio base station may use joint encoding as appropriate. For example, with respect to the MCS, P, PMI and RI, all pieces of information may be subjected to joint encoding to be transmitted. Further, it may be configured to select necessary pieces from among the pieces of information to perform joint encoding and transmit. For example, it may be configured to perform joint encoding on the information on the MCS and P, or it may be configured to perform joint encoding on the PMI and RI.

Further, using a DMRS (DeModulation Reference Signal), the radio base station may indirectly notify of the PMI. Furthermore, it may be configured that the radio base station transmits the PMI information using the user terminal-specific reference signal (UE-specific Reference Signal) such as the DMRS, and transmits the RI information using the DCI. In this case, the radio base station may beforehand notify the user terminal (or beforehand hold) of a correspondence relationship between the PMI and a DMRS port, and based on the information, the user terminal may determine.

(In regard to joint encoding)

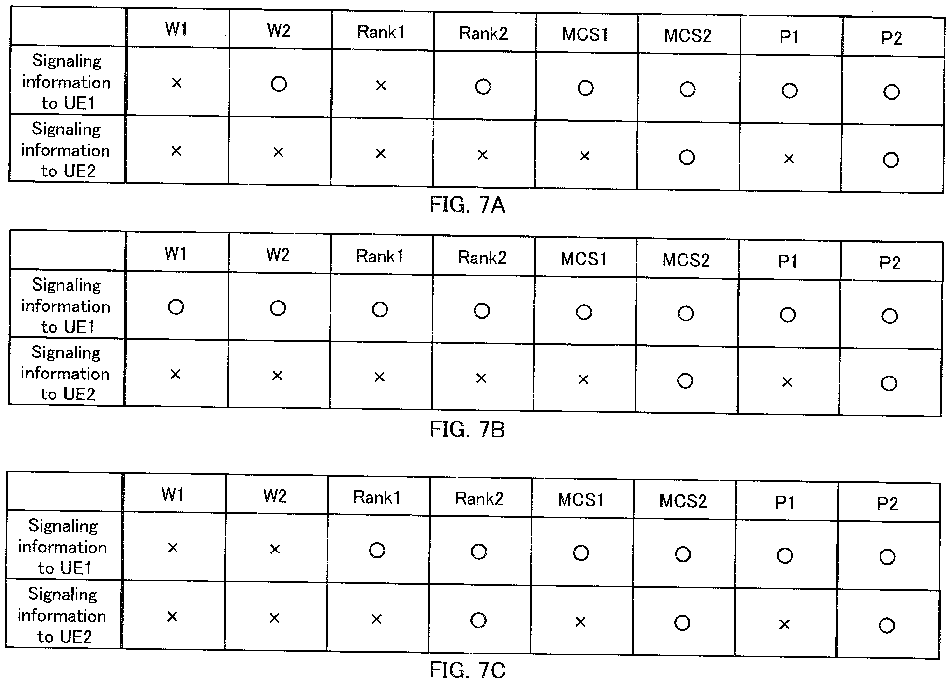

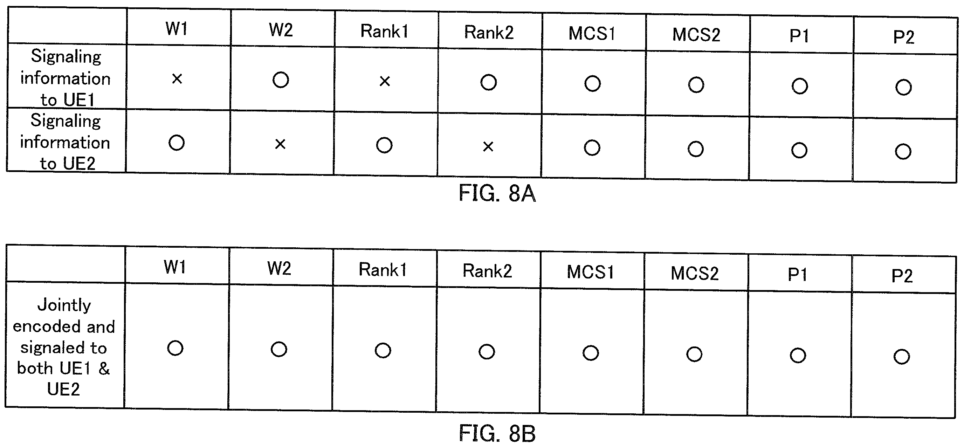

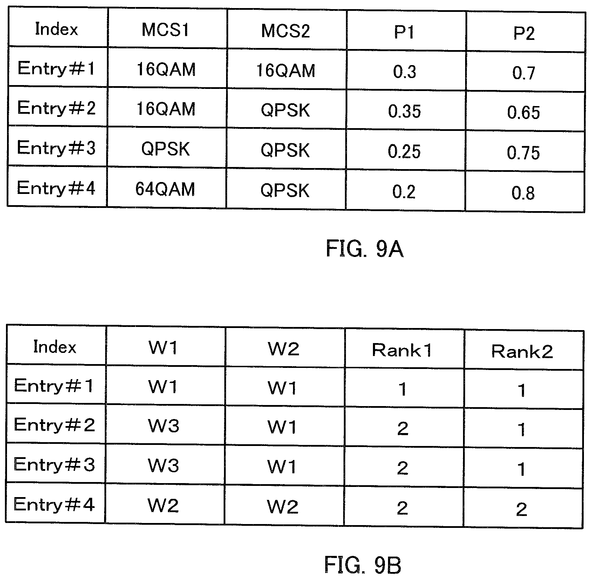

Joint encoding in this Embodiment will be described with reference to FIGs. 7 to 9. FIGs. 7 and 8 contain tables showing one example of notification information sets in this Embodiment, and FIG. 9 contains tables showing one example of tables for joint encoding. Herein, W represents a precoding weight (precoding matrix, PMI), Rank represents an RI, MCS represents a modulation coding scheme, and P represents a (transmit) power ratio. Numerical subscripts 1 and 2 represent information corresponding to the user terminal UE1 (that corresponds to the above-mentioned #UE1) and user terminal UE2 (that corresponds to the above-mentioned #UE2), respectively. In each diagram shown in FIGs. 7 and 8, types of parameters that the radio base station determines differ, according to the number of user terminals to apply SIC and a difference in the TM scheme to apply.

FIG. 7 (FIGs. 7A to 7C) shows an example in the case where only the UE1 near the radio base station performs SIC in the NOMA configuration of two user terminals UE1 and UE2 and the radio base station. In FIGs. 7A to 7C, the information that the radio base station transmits to each user terminal differs, according to differences in the parameter that the radio base station determines and the transmission mode. Hereinafter, in FIGs. 7 and 8, ○ represents information that the radio base station notifies the user terminal, and × represents information that the radio base station does not need to notify the user terminal.

FIGs. 7A and 7B show the case of using TM4, and FIG. 7C shows the case of using TM3.

FIG. 7A shows the case where the radio base station determines the MCS and P for NOMA. In this case, since the user terminal UE1 already knows the W and Rank of the user terminal UE1, the radio base station does not need to notify. On the other hand, the UE1 needs to be notified, from the radio base station, of information on W2, Rank2, MCS2, and P2 of the UE2 required to perform SIC, and MCS1 and P1 of the user terminal determined by the radio base station. On the other hand, with respect to the UE2, the UE2 does not perform SIC, and therefore, is notified of only MCS2 and P2 that are parameters of the user terminal UE2 determined by the radio bae station from the radio base station.

FIG. 7B shows the case where the radio base station determines the W, Rank, MCS and P for NOMA. In this case, the radio base station notifies the user terminal UE1 that performs SIC of all information (W1, W2, Rank1, Rank2, MCS1, MCS2, PI, P2) of the user terminals UE1 and UE2. On the other hand, with respect to the user terminal UE2, as parameters shown in FIG. 7A, the UE2 is notified of only MCS2 and P2 that are parameters of the user terminal UE2.

Although FIG. 7C shows the same case as in FIG. 7B, since the MIMO transmission mode is TM3, W is common to user terminals, and is determined in the base station, but the base station does not need to notify the user terminal. FIG. 7C shows the case where the radio base station determines the Rank, MCS and P for NOMA, and does not determine the W. In this case, the radio base station notifies the user terminal UE1 that performs SIC of information (Rank1, Rank2, MCS1, MCS2, PI, P2) except the PMIs of the user terminals UE1 and UE2. On the other hand, with respect to the user terminal UE2, the UE2 is notified of only Rank2, MCS2 and P2 that are parameters of the user terminal UE2.

Thus, when only the user terminal UE1 performs SIC, the user terminal UE1 is notified of the information on the UE2 as required. On the other hand, the user terminal UE2 is not notified of the information on the user terminal UE1, and is notified of only the information required for the user terminal UE2. Further, in the case of using TM3, since the W is fixed, information on the W may not be notified to the user terminals UE1 and UE2.

FIG. 8 (FIGs. 8A and 8B) shows an example in the case where the user terminals UE1 and UE2 perform SIC in the NOMA configuration of two user terminals UE1 and UE2 and the radio base station. In FIGs. 8A and 8B, the information that the radio base station transmits to each user terminal differs, according to differences in the parameter that the radio base station determines and the transmission mode.

FIG. 8A shows the case where the radio base station determines the MCS and P for NOMA in the case where both the user terminals perform SIC. Herein, the radio base station transmits information of MCS1, MCS2, P1 and P2 to both the user terminals UE1 and UE2. Further, with respect to the W and Rank, each of the user terminals UE1 and UE2 uses the held information on the W and Rank of each user terminal. Therefore, the radio base station is required to notify of only the W and Rank of the other user terminal UE1 or UE2.

In FIG. 8B, the radio base station notifies both the user terminals UE1 and UE2 of all information (W1, W2, Rank1, Rank2, MCS1, MCS2, PI, P2) on the user terminals UE1 and UE2. In this case, with respect to MCS1, MCS2, P1 and P2, the radio base station transmits, to the user terminals, the information that the radio base station determines.

Herein, with respect to W1, W2, Rank1 and Rank2, the user terminal may use the information that the terminal determines and notifies the radio base station, without modification. Alternatively, the user terminal may use information that is determined anew by the radio base station based on the information that the terminal determines and notifies the radio base station. Further, without being predicated on the information that the user terminal determines and transmits to the radio base station, the radio base station may determine information to transmit to the user terminal.

Thus, when both of the user terminals UE1 and UE2 perform SIC, in addition to the information required for the user terminal, the user terminals UE1 and UE2 need to be notified of the information required for the other user terminal from the radio base station.

With respect to the information that the radio base station notifies the user terminal as described in the foregoing, it is possible to notify individually for each piece of information, and it is also possible to perform joint encoding and signaling using a common channel (common signal).

In addition, as a signaling method, particularly, notification may be made in NOMA user terminal-common control information (disposed inside common search space), or may be made in NOMA user terminal-specific control information (disposed inside specific search space). In the above-mentioned examples, described is NOMA of user terminals of TM3 or TM4 as an example, and among NOMA user terminals, some user terminal may be of TM3, while another user terminal may be of TM4. The PDCCH may be used for notification of all pieces of information. Alternatively, a part of pieces of information may be notified using RRC (Radio Resource Control) signaling (e.g. allocated power, ID information of a NOMA user paired with a particular user), while notifying of the remaining pieces of information using the PDCCH.

In the case of notifying using the PDCCH, the PDCCH for each user terminal to schedule each user terminal may include information (at least one or more among the PMI, RI, MCS and P) on the other user terminal to be paired. Further, the PDCCH for each user terminal to transmit to each user terminal may include only identification information (ID information) to identify a user terminal to be paired, in addition to the control information of the user terminal. In other words, in this case, the information on the other user terminal may not be included in each user terminal. Using the ID information, each user terminal performs blind detection, and thereby may detect the PDCCH of the other user terminal in addition to the PDCCH for the user terminal to acquire the information (at least one or more among the PMI, RI, MCS and P) on the other user terminal in addition to the information for the user terminal.

Next, referring to FIG. 9, tables used in joint encoding will be described. Tables shown in FIG. 9 are one example of tables for joint encoding. In FIG. 9, each of Entry#1 to Entry#4 (also referred to as index) is associated with parameters of the MCS, P, W and Rank for user terminals UE1 and UE2. For example, in FIG. 9A, in the Entry#1, 16QAM is selected as the MCS of the UE1, while being selected as the MCS of the UE2, "0.3" is selected as the P of the UE1, and "0.7" is selected as the P of the UE2. In FIG. 9B, in the Entry#1, W1 is selected as the W of the UE1, while being selected as the W of the UE2, and "1" is selected as the Rank of the UE1, while being selected as the Rank of the UE2.

In these cases, the table of FIG. 9A and the table of FIG. 9B may be configured so that one of the tables is selected with respect to a particular index. Further, two tables are beforehand regarded as a single table, and may be configured so that these eight parameters are selected with respect to a particular index.

Similarly, also with respect to Entry# 2 to Entry#4, parameters are associated with each Entry. Tables shown in FIG. 9 are one example, and used tables are not limited to the tables. For example, the number of indexes is not limited to "4", and may be five or more, or three or less. Further, the number of parameters associated with one index is not limited to "4" or "8" as described above. For example, in the case of using TM3, the number of parameters may be "6" with W1 and W2 omitted. Furthermore, the number of tables to use is not limited to "1". In this case, it may be configured to have a plurality of tables to select the table. Still furthermore, the number of parameters associated with the index may not be certain.

The tables shown in FIG. 9 may be used in combination with the tables shown in FIGs. 7 and 8. For example, among the parameters designated by the index in FIG. 9, it may be configured to use only parameters designated by ○ in FIGs. 7 and 8.

In addition, joint encoding may be performed on a plurality of users, or may be performed on a plurality of indexes. Further, users and indexes may be combined to perform. Furthermore, the radio base station may determine information to notify the user terminal as described below.

Further, the MCS, P, W (PMI) and RI may not be subjected to joint encoding, and may be set to notify the user terminal individually. For example, it may be set to individually notify using the DCI (Downlink Control Information), and higher layer signaling such as RRC signaling. When it is configured to notify of the information using the DCI, since it is possible to notify of the information with a relatively short time lag, it is possible to suitably control the communication state corresponding to the channel state.

Furthermore, when the radio base station determines the RI and PMI, the radio base station may be configured to notify a user terminal of the MCS, PMI and P of the user terminal and the other user terminal. Further, the radio base station may be configured to transmit the P, PMI and RI, without notifying of the MCS.

Still furthermore, in the case of changing the MCS, P, PMI and RI, the radio base station may be configured to notify the user terminal of the information. In this case, as well as the user terminal targeted for the changed information, it may be configured to notify a user terminal using the information of the information

(Feedback)

The user terminal may be configured to select the RI and PMI, and calculate a CQI (Channel Quality Indicator) corresponding to the selection to transmit to the radio base station as feedback (single feedback configuration). Further, the user terminal may be configured to select CQIs and PMIs for all Rank candidates (RIs), and thereby transmit the result to the radio base station (multiple feedback configuration).

In the case of the multiple feedback configuration, for example, in the case of Rank 2, it may be configured to transmit CQI1 and PMI1 (Rank1 (CQI1, PMI1)) of the case of Rank1 as information of Rank1, while transmitting CQI2 and PMI2 (Rank2 (CQI2, PMI2)) of Rank2 as information of Rank2. In one Embodiment of the present invention that is the MIMO configuration, since there is a possibility that the Rank number (RI) suitable for communication changes, by making such a configuration, the radio base station is capable of properly controlling the RI. The radio base station is capable of selecting suitable Rank (RI) and PMI corresponding to the NOMA user terminal to be paired, using a plurality of pieces of feedback information transmitted from the user terminal as candidates.

The PMI and/or the RI determined in the radio base station may be explicitly notified to the user terminal, or may be implicitly notified.

In the case of using TM3, as feedback information from the user terminal to the radio base station, for example, the user terminal may be configured to transmit CQI1 in the case where the RI is Rank1, CQI2 in the case where the RI is Rank2, and the like to the radio base station.

The radio base station may be configured to control the PMI and/or the RI to notify the user terminal, based on information on the PMI and/or the RI transmitted from the user terminal. In addition, the radio base station may use the same PMI as the PMI notified from the user terminal, or may use a PMI different from the PMI notified from the user terminal.

In one Embodiment of the present invention, since NOMA is applied, there is a possibility that suitable PMI and RI differ, corresponding to the power ratio (power allocation) of a plurality of user terminals.

In addition, the radio base station may be configured to select a Rank that maximizes scheduling metrics.

Further, the radio base station may also be configured to forcibly make PMIs to apply to a plurality of user terminals the same. In this case, a plurality of user terminals uses the same PMI. By making such a configuration, it is possible to enhance the probability that the user terminal is capable of decoding the signal. In this case, among user terminals, only a user terminal with the PMI changed may be provided with notification of the PMI, or a plurality of user terminals may be provided with notification of the PMI.

In the above-mentioned example, the case is described where by using SIC in the power-multiplexed received signal, the user terminal removes a signal of the other user terminal to acquire a signal of the user terminal, but the invention is not limited to this example. Such a configuration is essential only that a signal of a predetermined user terminal is acquired from the power-multiplexed received signal. For example, the signal of the user terminal may be acquired without using SIC. As an example, also in the case of acquiring the signal of the user terminal from the power-multiplexed received signal by using maximum likelihood estimation, it is possible to apply the above-mentioned Embodiment.

(Radio communication system)

A configuration of a radio communication system according to one Embodiment of the present invention will be described below. In the radio communication system, radio communication methods according to the above-mentioned Embodiment of the invention are applied. In addition, the above-mentioned radio communication methods may be applied alone, or may be applied in combination thereof. In addition, the same component is assigned with the same reference numeral to omit redundant descriptions.

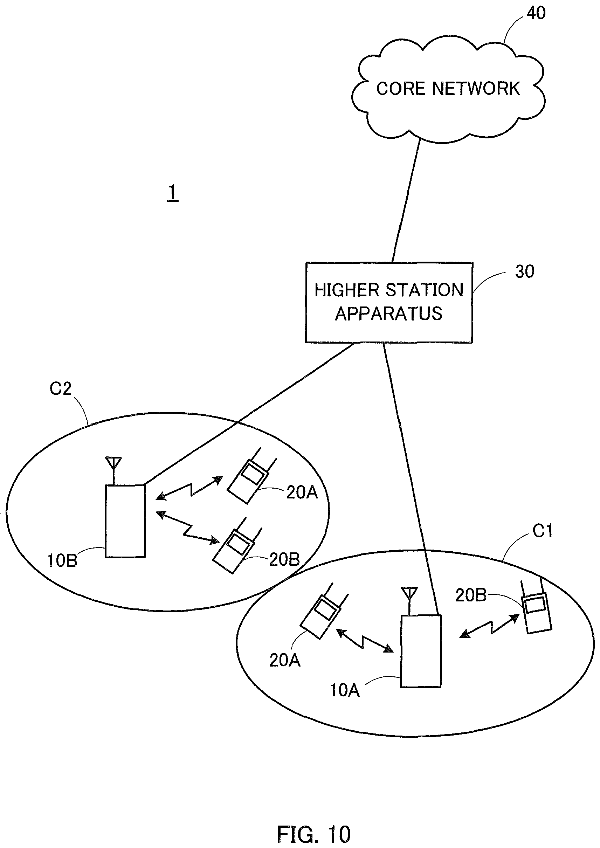

FIG. 10 is a diagram showing one example of a schematic configuration of the radio communication system according to one Embodiment of the present invention. In addition, the radio communication system 1 may be called SUPER 3G, LTE-A (LTE-Advanced), IMT-Advanced, 4G, 5G, FRA (Future Radio Access) and the like.

The radio communication system 1 shown in FIG. 10 includes radio base stations 10 (10A, 10B), and a plurality of user terminals 20 (20A, 20B) that communicate with the radio base station 10. The radio base stations 10 are connected to a higher station apparatus 30, and are connected to a core network 40 via the higher station apparatus 30. Each user terminal 20 is capable of communicating with the radio base stations 10 in cells C1, C2, respectively. In addition, for example, the higher station apparatus 30 includes an access gateway apparatus, Radio Network Controller (RNC), Mobility Management Entity (MME) and the like, but is not limited thereto. Further, the radio base stations 10 may be subjected to wired connection (optical fiber, X2 interface and the like) or wireless connection.

In addition, the radio base station 10 may be a macro base station, collection node, eNodeB (eNB), transmission/reception point and the like for forming a macro cell, or may be a small base station, micro-base station, pico-base station, femto-base station, Home eNodeB (HeNB), RRH (Remote Radio Head), transmission/reception point and the like for forming a small cell. Each user terminal 20 is a terminal supporting various communication schemes such as LTE and LTE-A, and may include a fixed communication terminal, as well as the mobile communication terminal.

In the radio communication system 1, as radio access schemes, NOMA (Non-Orthogonal Multiple Access) is applied on downlink, and SC-FDMA (Single Carrier Frequency Division Multiple Access) is applied on uplink. Further, OFDMA (Orthogonal Frequency Division Multiple Access) may be applied on downlink. In addition, uplink and downlink radio access schemes are not limited to the combination of the schemes.

NOMA is a multicarrier transmission scheme for dividing a frequency band into a plurality of narrow frequency bands (subcarriers, sub-bands or the like), and performing non-orthogonal multiplexing on signals of user terminals 20 with different transmit power for each sub-band, and OFDMA is a multicarrier transmission scheme for dividing a frequency band into a plurality of sub-bands, and performing orthogonal multiplexing on signals of user terminals 20 for each sub-band to perform communication. SC-FDMA is a single-carrier transmission scheme for dividing a system bandwidth into bands comprised of a single or contiguous resource blocks for each terminal so that a plurality of user terminals 20 uses mutually different bands, and thereby reducing interference among user terminals.

Described herein are communication channels used in the radio communication system 1. The downlink communication channels include a downlink shared data channel (PDSCH: Physical Downlink Shared Channel) shared by user terminals 20, broadcast channel (PBCH: Physical Broadcast Channel), downlink L1/L2 control channels (PDCCH, EPDCCH, PCFICH, PHICH, etc.) and the like. User data, higher layer control information, SIB (System Information Block) and the like are transmitted on the PDSCH. Further, MIB (Master Information Block) is transmitted on the PBCH.

Downlink control information (DCI) including scheduling information of the PDSCH and PUSCH is transmitted on the PDCCH (Physical Downlink Control Chanel). The EPDCCH is frequency division multiplexed with the PDSCH (downlink shared data channel) to be used in transmitting the DCI and the like as the PDCCH. The number of OFDM symbols used in the PDCCH is transmitted on the PCFICH (Physical Control Format Indicator Channel). A receipt confirmation signal (e.g. ACK/NACK) of HARQ (Hybrid ARQ) for the PUSCH is transmitted on the PHICH (Physical Hybrid-ARQ Indicator Channel).

Further, the uplink communication channels include an uplink shared channel (PUSCH: Physical Uplink Shared Channel) shared by user terminals 20, uplink control channel (PUCCH: Physical Uplink Control Channel), random access channel (PRACH: Physical Random Access Channel) and the like. User data and higher layer control information is transmitted on the PUSCH. Further, radio quality information (CQI: Channel Quality Indicator) of downlink, receipt conformation signal and the like are transmitted on the PUCCH. A random access preamble to establish connection with the cell is transmitted on the PRACH.

(Radio base station)

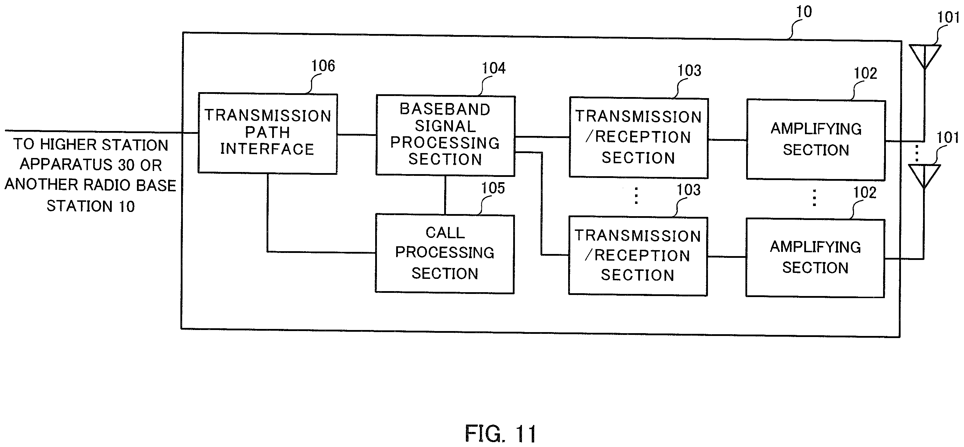

FIG. 11 is a diagram showing one example of an entire configuration of the radio base station according to one Embodiment of the present invention. The radio base station 10 is provided with a plurality of transmission/reception antennas 101, amplifying sections 102, transmission/reception sections 103, baseband signal processing section 104, call processing section 105, and transmission path interface 106. In addition, with respect to each of the transmission/reception antenna 101, amplifying section 102, and transmission/reception section 103, the radio base station is essentially configured to include at least one or more.

User data to transmit to the user terminal 20 from the radio base station 10 on downlink is input to the baseband signal processing section 104 from the higher station apparatus 30 via the transmission path interface 106.

The baseband signal processing section 104 performs, on the user data, transmission processing such as processing of PDCP (Packet Data Convergence Protocol) layer, segmentation and concatenation of the user data, transmission processing of RLC (Radio Link Control) layer such as RLC retransmission control, MAC (Medium Access Control) retransmission control (e.g. transmission processing of HARQ (Hybrid Automatic Repeat reQuest)), scheduling, transmission format selection, channel coding, Inverse Fast Fourier Transform (IFFT) processing, and precoding processing to transfer to the transmission/reception sections 103. Further, also concerning a downlink control signal, the section 104 performs transmission processing such as channel coding and Inverse Fast Fourier Transform on the signal to transfer to the transmission/reception sections 103.

Each of the transmission/reception sections 103 converts the baseband signal, which is subjected to precoding for each antenna and is output from the baseband signal processing section 104, into a signal with a radio frequency band to transmit. The radio-frequency signal subjected to frequency conversion in the transmission/reception section 103 is amplified in the amplifying section 102, and is transmitted from the transmission/reception antenna 101. The transmission/reception section 103 is capable of being comprised of a transmitter/receiver, transmission/reception circuit or transmission/reception apparatus explained based on common recognition in the technical field according to the present invention. In addition, the transmission/reception section 103 may be comprised as an integrated transmission/reception section, or may be comprised of a transmission section and reception section.

The transmission/reception section 103 transmits, to the user terminal 20, information on the MCS (MCS index), P (Power ratio index), PMI (Precoding Matrix Indicator), RI (Rank Indicator) and the like, by higher layer signaling (RRC (Radio Resource Control), etc.) and downlink control information (DCI). Further, the section 103 may be configured to transmit an Index (also referred to as Entry) obtained by performing joint encoding on the aforementioned indexes and indicators. Furthermore, the section 103 transmits a modulated signal of data of each user terminal on the PDSCH.

The transmission/reception section 103 may be configured to receive information on the CQI, RI and PMI transmitted from the user terminal 20.

On the other hand, for uplink signals, radio-frequency signals received in the transmission/reception antennas 101 are amplified in the amplifying sections 102. The transmission/reception section 103 receives the uplink signal amplified in the amplifying section 102. The transmission/reception section 103 performs frequency conversion on the received signal into a baseband signal to output to the baseband signal processing section 104.

For user data included in the input uplink signal, the baseband signal processing section 104 performs Fast Fourier Transform (FFT) processing, Inverse Discrete Fourier Transform (IDFT) processing, error correcting decoding, reception processing of MAC retransmission control, and reception processing of RLC layer and PDCP layer to transfer to the higher station apparatus 30 via the transmission path interface 106. The call processing section 105 performs call processing such as setting and release of a communication channel, state management of the radio base station 10, and management of radio resources.

The transmission path interface 106 transmits and receives signals to/from the higher station apparatus 30 via a predetermined interface. Further, the transmission path interface 106 may transmit and receive signals (backhaul signaling) to/from an adjacent radio base station 10 via an inter-base station interface (e.g. optical fiber in conformity with CPRI (Common Public Radio Interface), X2 interface).

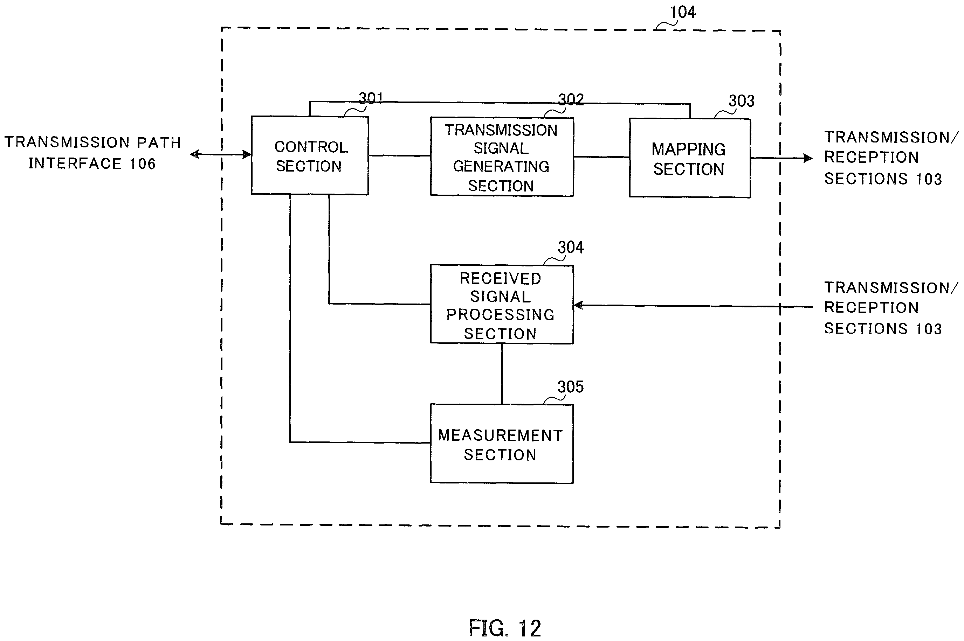

FIG. 12 is a diagram showing one example of a function configuration of the radio base station according to one Embodiment of the present invention. In addition, FIG. 12 mainly illustrates function blocks of a characteristic portion according to one Embodiment of the invention, and the radio base station 10 is assumed to have other function blocks required for radio communication. As shown in FIG. 12, the baseband signal processing section 104 is provided with a control section (scheduler) 301, transmission signal generating section 302, mapping section 303, received signal processing section 304, and measurement section 305.

The control section (scheduler) 301 performs control of the entire radio base station 10. The control section 301 is capable of being comprised of a controller, control circuit or control apparatus explained based on the common recognition in the technical field according to the present invention.

For example, the control section 301 controls generation of signals by the transmission signal generating section 302, and assignment of signals by the mapping section 303. Further, the control section 301 controls reception processing of signals by the received signal processing section 304, and measurement of signals by the measurement section 305.

The control section 301 controls scheduling (e.g. resource allocation) of system information, a downlink data signal transmitted on the PDSCH and downlink control signal transmitted on the PDCCH and/or EPDCCH. Further, the control section 301 controls scheduling of a synchronization signal and downlink reference signals such as the CRS (Cell-specific Reference Signal), CSI-RS (Channel State Information Reference Signal), and DMRS (DeModulation Reference signal).

Further, the control section 301 controls scheduling of an uplink data signal transmitted on the PUSCH, uplink control signal (e.g. receipt conformation signal (HARQ-ACK)) transmitted on the PUCCH and/or the PUSCH, random access preamble transmitted on the PRACH, uplink reference signal and the like.

Furthermore, the control section 301 controls power of a transmission signal to each user terminal 20 so as to properly perform power multiplexing.

Still furthermore, when the control section 301 is capable of using the DMRS, UE-specific reference signal and the like, the section 301 may make parameters of the transmit power ratio, a value of precoding vector and the like of the reference signal the same as parameters of the downlink data signal.

Moreover, the control section 301 may control the PMI and/or the RI, corresponding to the PMI and/or CQI which is transmitted from the user terminal 20 and is received in the transmission/reception section 103. Further, the control section 301 controls the RI (the number of layers) in a MIMO downlink signal. Furthermore, the control section 301 may apply a PMI different from the PMI received in the transmission/reception section 103 to a downlink signal.

Further, the control section 301 may determine information to notify each user terminal 20, based on a table of the transmission signal generating section 302 described later.

Based on instructions from the control section 301, the transmission signal generating section 302 generates DL signals to output to the mapping section 303. The transmission signal generating section 302 is capable of being comprised of a signal generator, signal generating circuit or signal generating apparatus explained based on the common recognition in the technical field according to the present invention.

The transmission signal generating section 302 power-multiplexes modulated signals to respective user terminals 20. The transmission signal generating section 302 outputs the power-multiplexed modulated signal to the mapping section 303.

For example, based on instructions from the control section 301, the transmission signal generating section 302 generates a DL assignment for notifying of downlink signal assignment information and an UL grant for notifying of uplink signal assignment information. Further, the downlink data signal is subjected to coding processing and modulation processing, according to a coding rate, modulation scheme and the like determined based on channel state information (CSI) from each user terminal 20 and the like.

Further, the transmission signal generating section 302 modulates the downlink signal to each user terminal 20, and multiplies by a precoding weight. Furthermore, corresponding to the distance between the radio base station 10 and the user terminal 20, the transmission signal generating section 302 controls power of the downlink signal to each user terminal 20.

Moreover, the transmission signal generating section 302 may have a table in which an index is associated with W (PMI), Rank (RI), MCS (modulation coding scheme) and P (power ratio). The table may describe a set of information to notify the user terminal, or may specifically describe information to transmit. Further, the table may describe information to transmit to each user terminal 20. The table may be another table other than such tables, and for example, the index may be associated with at least one or more pieces of information among these four pieces of information. Based on the pieces of information of the table, the transmission signal generating section 302 may generate a signal to transmit to the user terminal 20.

Further, the transmission signal generating section 302 may include information on the user terminal 20 in the PDCCH. For example, the information on each user terminal may be one or more pieces of information among the PMI, RI, MCS and P of each user terminal. Alternatively, in addition to one or more pieces of information among the PMI, RI, MCS and P for the user, the information may be identification information (ID information) to identify the user for the NOMA user terminal paired with the user. Further, the information may be a combination of these pieces of information.

The transmission signal generating section 302 is capable of actualizing the data buffer section, turbo coding section, data modulation section, multiplying section, power adjusting section, non-orthogonal multiplexing section and the like in FIG. 2.

Based on instructions from the control section 301, the mapping section 303 maps the downlink signal generated in the transmission signal generating section 302 to predetermined radio resources to output to the transmission/reception section 103. The mapping section 303 is capable of being comprised of a mapper, mapping circuit or mapping apparatus explained based on the common recognition in the technical field according to the present invention. The mapping section 303 is capable of actualizing the multiplexing section in FIG. 3.

The received signal processing section 304 performs reception processing (e.g. demapping, demodulation, decoding and the like) on the received signal input from the transmission/reception section 103. Herein, for example, the received signal is a UL signal (uplink control signal, uplink data signal) transmitted from the user terminal 20. The received signal processing section 304 is capable of being comprised of a signal processor, signal processing circuit or signal processing apparatus explained based on the common recognition in the technical field according to the present invention.

The received signal processing section 304 outputs information decoded by the reception processing to the control section 301. Further, the received signal processing section 304 outputs the received signal and signal subjected to the reception processing to the measurement section 305.

The measurement section 305 performs measurement on the received signal. The measurement section 305 is capable of being comprised of a measurement device, measurement circuit or measurement apparatus explained based on the common recognition in the technical field according to the present invention.

For example, the measurement section 305 may measure received power (e.g. RSRP (Reference Signal Received Power)), received quality (e.g. RSRQ (Reference Signal Received Quality)), channel state and the like of the received signal. The measurement result may be output to the control section 301.

(User terminal)

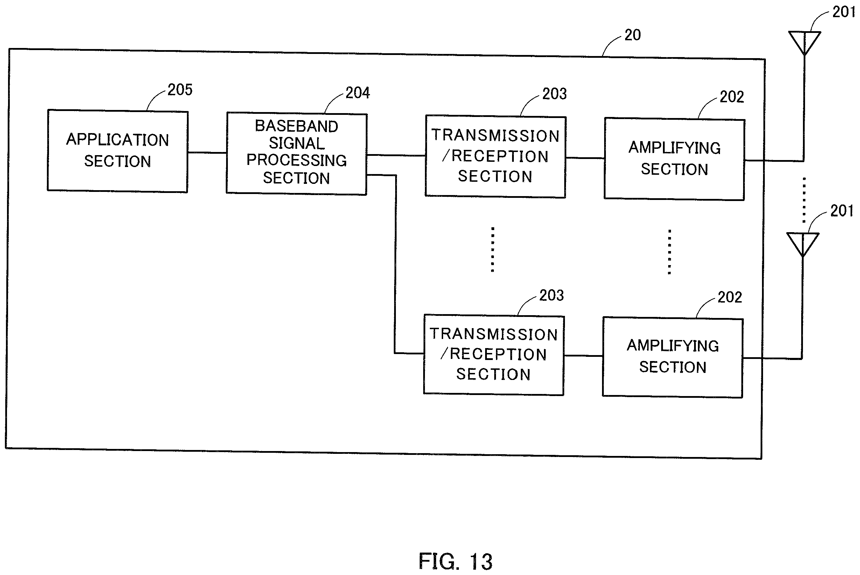

FIG. 13 is a diagram showing one example of an entire configuration of the user terminal according to this Embodiment. The user terminal 20 is provided with a plurality of transmission/reception antennas 201, amplifying sections 202, transmission/reception sections 203, baseband signal processing section 204, and application section 205. In addition, with respect to each of the transmission/reception antenna 201, amplifying section 202, and transmission/reception section 203, the user terminal is essentially configured to include at least one or more.

Radio-frequency signals received in the transmission/reception antennas 201 are respectively amplified in the amplifying sections 202. Each of the transmission/reception sections 203 receives the downlink signal amplified in the amplifying section 202. The transmission/reception section 203 performs frequency conversion on the received signal into a baseband signal to output to the baseband signal processing section 204. The transmission/reception section 203 is capable of being comprised of a transmitter/receiver, transmission/reception circuit or transmission/reception apparatus explained based on the common recognition in the technical field according to the present invention. In addition, the transmission/reception section 203 may be comprised as an integrated transmission/reception section, or may be comprised of a transmission section and reception section.

The transmission/reception section 203 receives the downlink data signal (PDSCH) to which modulated signals to a plurality of user terminals are power-multiplexed as described above. Further, the transmission/reception section 203 receives higher layer signaling (RRC, etc.) and downlink control signal (DCI). Furthermore, the transmission/reception section 203 receives the PMI and/or the RI.

The transmission/reception section 203 may be configured to be able to transmit the RI, PMI and CQI to the radio base station 10.

Further, the transmission/reception section 203 may transmit information on the PMI and/or the CQI to the radio base station 10. Furthermore, the information on the PMI and/or the CQI may include information on PMIs and/or CQIs with respect to all Rank candidates.

The baseband signal processing section 204 performs FFT processing, error correcting decoding, reception processing of retransmission control and the like on the input baseband signal. User data on downlink is transferred to the application section 205. The application section 205 performs processing concerning layers higher than physical layer and MAC layer, and the like. Further, among the downlink data, broadcast information is also transferred to the application section 205.

On the other hand, for user data on uplink, the data is input to the baseband signal processing section 204 from the application section 205. The baseband signal processing section 204 performs transmission processing of retransmission control (e.g. transmission processing of HARQ), channel coding, precoding, Discrete Fourier Transform (DFT) processing, IFFT processing and the like to transfer to the transmission/reception sections 203. Each of the transmission/reception sections 203 converts the baseband signal output from the baseband signal processing section 204 into a signal with a radio frequency band to transmit. The radio-frequency signals subjected to frequency conversion in the transmission/reception sections 203 are amplified in the amplifying sections 202, and transmitted from the transmission/reception antennas 201, respectively.

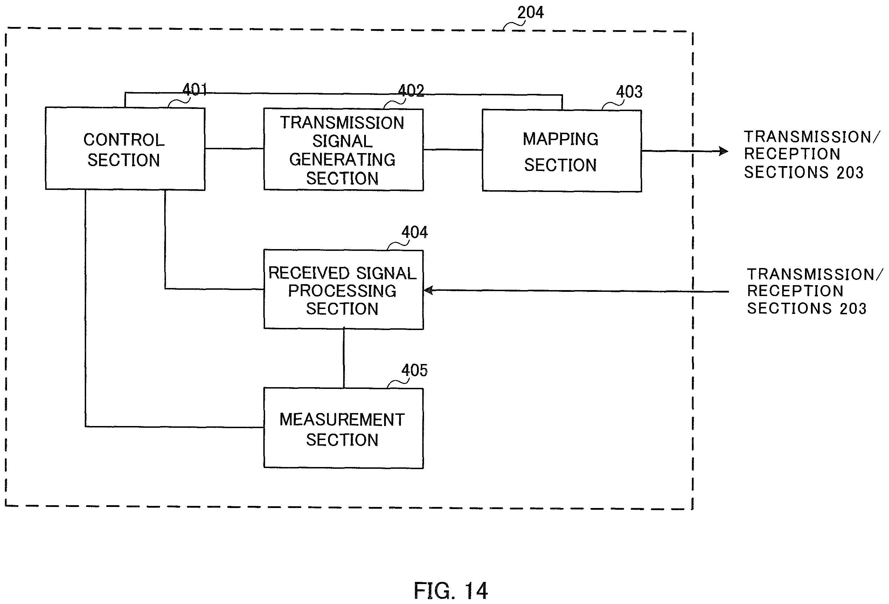

FIG. 14 is a diagram showing one example of a function configuration of the user terminal according to this Embodiment. In addition, FIG. 14 mainly illustrates function blocks of a characteristic portion in this Embodiment, and the user terminal 20 is assumed to have other function blocks required for radio communication. As shown in FIG. 14, the baseband signal processing section 204 that the user terminal 20 has is provided with a control section 401, transmission signal generating section 402, mapping section 403, received signal processing section 404, and measurement section 405.

The control section 401 performs control of the entire user terminal 20. The control section 401 is capable of being comprised of a controller, control circuit or control apparatus explained based on the common recognition in the technical field according to the present invention.

For example, the control section 401 controls generation of signals by the transmission signal generating section 402, and assignment of signals by the mapping section 403. Further, the control section 401 controls reception processing of signals by the received signal processing section 404, and measurement of signals by the measurement section 405.

The control section 401 acquires the downlink control signal (signal transmitted on the PDCCH/EPDCCH) and downlink data signal (signal transmitted on the PDSCH) transmitted from the radio base station 10 from the received signal processing section 404. Based on the downlink control signal, a result of judging necessity of retransmission control to the downlink data signal and the like, the control section 401 controls generation of the uplink control signal (e.g. receipt conformation signal (HARQ-ACK) and the like) and uplink data signal.

Based on instructions from the control section 401, the transmission signal generating section 402 generates UL signals to output to the mapping section 403. The transmission signal generating section 402 is capable of being comprised of a signal generator, signal generating circuit or signal generating apparatus explained based on the common recognition in the technical field according to the present invention.

For example, based on instructions from the control section 401, the transmission signal generating section 402 generates the uplink control signal concerning the receipt conformation signal (HARQ-ACK) and channel state information (CSI). Further, based on instructions from the control section 401, the transmission signal generating section 402 generates the uplink data signal. For example, when the UL grant is included in the downlink control signal notified from the radio base station 10, the transmission signal generating section 402 is instructed to generate the uplink data signal from the control section 401.

Further, the transmission signal generating section 402 may generate the information on the PMI and/or the CQI. Furthermore, the information on the PMI and/or the CQI may include the information on PMIs and/or CQIs with respect to all Rank candidates.

Based on instructions from the control section 401, the mapping section 403 maps the uplink signal generated in the transmission signal generating section 402 to radio resources to output to the transmission/reception section 203. The mapping section 403 is capable of being comprised of a mapper, mapping circuit or mapping apparatus explained based on the common recognition in the technical field according to the present invention.

The received signal processing section 404 performs reception processing (e.g. demapping, demodulation, decoding and the like) on the received signal input from the transmission/reception section 203. Herein, for example, the received signal is the DL signal (downlink control signal, downlink data signal and the like) transmitted from the radio base station 10. The received signal processing section 404 is capable of being comprised of a signal processor, signal processing circuit or signal processing apparatus explained based on the common recognition in the technical field according to the present invention. Further, the received signal processing section 404 is capable of constituting the reception section according to the present invention.

The received signal processing section 404 outputs information decoded by the reception processing to the control section 401. For example, the received signal processing section 404 outputs the broadcast information, system information, RRC signaling, DCI and the like to the control section 401. Further, the received signal processing section 404 outputs the received signal and signal subjected to the reception processing to the measurement section 405.

The received signal processing section 404 is capable of being a configuration for detecting values of the PMI, RI, MCS and P applied to the received downlink signal.

The received signal processing section 404 is capable of detecting information on the user terminal 20 included in the received PDCCH. Herein, as the information on the user terminal 20, for example, the information is one or more pieces of information among the PMI, RI, MCS and P, or may be ID information to identify another user terminal 20. Further, being not limited to the information on the user terminal 20, the section 404 may detect information on another user terminal (NOMA user terminal to be paired) 20.

The received signal processing section 404 is capable of actualizing the MMSE section, demodulation decoding section, interference replica generating section, interference cancellation section and the like in FIG. 6.

The measurement section 405 performs measurement on the received signal. The measurement section 405 is capable of being comprised of a measurement device, measurement circuit or measurement apparatus explained based on the common recognition in the technical field according to the present invention.

For example, the measurement section 405 may measure received power (e.g. RSRP), received quality (e.g. RSRQ), channel state and the like of the received signal. The measurement result may be output to the control section 401. The measurement section 405 is capable of actualizing the channel estimation section in FIG. 6.

In addition, the block diagrams used in explanation of the above-mentioned Embodiment show blocks on a function-by-function basis. These function blocks (configuration section) are actualized by any combination of hardware and software. Further, the means for actualizing each function block is not limited particularly. In other words, each function block may be actualized by a single physically combined apparatus, or two or more physically separated apparatuses are connected by cable or radio, and each function block may be actualized by a plurality of these apparatuses.

For example, a part or the whole of each of functions of the radio base station 10 and user terminal 20 may be actualized using hardware such as ASIC (Application Specific Integrated Circuit), PLD (Programmable Logic Device), and FPGA (Field Programmable Gate Array). Further, each of the radio base station 10 and user terminal 20 may be actualized by a computer apparatus including a processor (CPU: Central Processing Unit), communication interface for network connection, memory, and computer-readable storage medium holding programs. In other words, the radio base station, user terminal and the like according to one Embodiment of the present invention may function as a computer for performing processing of the radio communication method according to the invention.

Herein, the processor, memory and the like are connected on the bus to communicate information. Further, for example, the computer-readable storage medium is a storage medium such as a flexible disk, magneto-optical disk, ROM (Read Only Memory), EPROM (Erasable Programmable ROM), CD-ROM (Compact Disc-ROM), RAM (Random Access Memory) and hard disk. Furthermore, the program may be transmitted from a network via an electrical communication line. Still furthermore, each of the radio base station 10 and user terminal 20 may include an input apparatus such as input keys and output apparatus such as a display.

The function configurations of the radio base station 10 and user terminal 20 may be actualized by the above-mentioned hardware, may be actualized by software modules executed by the processor, or may be actualized in combination of the hardware and software modules. The processor operates an operating system to control the entire user terminal. Further, the processor reads the program, software module and data from the storage medium onto the memory, and according thereto, executes various kinds of processing.

Herein, it is essential only that the program is a program for causing the computer to execute each operation described in the above-mentioned each Embodiment. For example, the control section 401 of the user terminal 20 may be actualized by a control program stored in the memory to operate by the processor, and the other function blocks may be actualized similarly.

As described above, the present invention is specifically described, but it is obvious to a person skilled in the art that the invention is not limited to the Embodiment described in the present Description. For example, each of the above-mentioned Embodiments may be used alone or may be used in combination. The invention is capable of being carried into practice as modified and changed aspects without departing from the subject matter and scope of the invention defined by the descriptions of the scope of the claims. Accordingly, the descriptions of the present Description are intended for illustrative explanation, and do not have any restrictive meaning to the invention.

The present application is based on Japanese Patent Application No. 2015-080320 filed on April 9, 2015, entire content of which is expressly incorporated by reference herein.

**Claims**

**1.** A radio base station comprising:

a transmission section that performs power multiplexing on downlink signals to a plurality of user terminals each having a MIMO (Multiple-Input Multiple-Output) configuration to transmit; and
a control section that controls a PMI (Precoding Matrix Indicator) and/or an RI (Rank Indicator) applied to the downlink signals,

wherein the transmission section transmits information on the PMI and/or the RI of another user terminal to a predetermined user terminal.

2. The radio base station according to claim 1, wherein using a PDCCH (Physical Downlink Control Channel), the transmission section transmits the information on the PMI and/or the RI.

3. The radio base station according to claim 2, wherein the transmission section includes the information on the PMI and/or the RI of another user terminal or identification information to identify the another user terminal in the PDCCH for the predetermined user terminal to transmit.

4. The radio base station according to any one of claims 1 to 3, further comprising:

a reception section that receives information on the PMI and/or a CQI (Channel Quality Indicator) from the predetermined user terminal,

wherein based on the information on the PMI and/or the CQI, the control section controls the PMI and/or the RI applied to the downlink signals.

5. The radio base station according to claim 4, wherein the information on the PMI and/or the CQI includes information on PMIs and/or CQIs for all Rank candidates.

6. The radio base station according to claim 4 or 5, wherein when the control section makes a change to the PMI and/or the RI of a downlink signal to the predetermined user terminal based on the information on the PMI and/or the CQI, the transmission section transmits information on the change to the predetermined user terminal.

7. The radio base station according to claim 2, wherein the transmission section transmits information on the PMI using a user terminal-specific reference signal associated with the PMI, and transmits information on the RI using the PDCCH or RRC (Radio Resource Control) signaling.

8. A user terminal among a plurality of user terminals each having a MIMO (Multiple-Input Multiple-Output) configuration, comprising:

a reception section that receives a power-multiplexed downlink signal, and information on a PMI (Precoding Matrix Indicator) and/or an RI (Rank Indicator) applied to the downlink signal; and
a received signal processing section that performs reception processing of the downlink signal based on information on the PMI and/or the RI of another user terminal.

9. A radio communication system where a radio base station communicates with a plurality of user terminals each having a MIMO (Multiple-Input Multiple-Output) configuration, comprising:

a transmission section that performs power multiplexing on downlink signals to the plurality of user terminals to transmit; and
a control section that controls a PMI (Precoding Matrix Indicator) and/or an RI (Rank Indicator) applied to the downlink signals,
wherein the transmission section transmits information on the PMI and/or the RI of another user terminal to a predetermined user terminal.

10. A radio communication method in a radio base station that communicates with a plurality of user terminals, including:

performing power multiplexing on downlink signals to the plurality of user terminals each having a MIMO (Multiple-Input Multiple-Output) configuration to transmit;
controlling a PMI (Precoding Matrix Indicator) and/or an RI (Rank Indicator) applied to the downlink signals; and
transmitting information on the PMI and/or the RI of another user terminal to a predetermined user terminal.

FIG. 1

PRECODING WEIGHT

POWER ADJUSTING SECTION

DATA BUFFER SECTION → TURBO CODING SECTION → DATA MODULATION SECTION

POWER ADJUSTING SECTION

STREAMS #1-2

UE #1-2

CRS, ETC.

NON-ORTHOGONAL MULTIPLEXING SECTION → MULTIPLEXING SECTION

ANTENNAS #1-2

FIG. 2

EP 3 282 609 A1

FIG. 3A

RECEIVED SIGNAL

ANTENNAS #1-2

CRS

CHANNEL
ESTIMATION
SECTION

INTERFERENCE USER TERMINAL (UE #2)

MMSE
SECTION

DEMODULATION ·
DECODING
SECTION

INTERFERENCE
REPLICA
GENERATING
SECTION

DESIRED USER TERMINAL (UE #1)

STREAMS #1-2

RECEI
VED
DATA

INTERFERENCE
CANCELLATION
SECTION

MMSE
SECTION

DEMODULATION ·
DECODING
SECTION

STREAM #1-2

FIG. 3B

RECEIVED SIGNAL

ANTENNAS #1-2

CRS

CHANNEL
ESTIMATION
SECTION

DESIRED USER TERMINAL (UE #2)

MMSE
SECTION

DEMODULATION
· DECODING
SECTION

RECEIVED
DATA

STREAMS #1-2

19

FIG. 4

FIG. 5

EP 3 282 609 A1

## FIG. 6A

FIG. 6

EP 3 282 609 A1

|  | W1 | W2 | Rank1 | Rank2 | MCS1 | MCS2 | P1 | P2 |
|---|---|---|---|---|---|---|---|---|
| Signaling information to UE1 | × | ○ | × | ○ | ○ | ○ | ○ | ○ |
| Signaling information to UE2 | × | × | × | × | × | ○ | × | ○ |

FIG. 7A

|  | W1 | W2 | Rank1 | Rank2 | MCS1 | MCS2 | P1 | P2 |
|---|---|---|---|---|---|---|---|---|
| Signaling information to UE1 | ○ | ○ | ○ | ○ | ○ | ○ | ○ | ○ |
| Signaling information to UE2 | × | × | × | × | × | ○ | × | ○ |

FIG. 7B

|  | W1 | W2 | Rank1 | Rank2 | MCS1 | MCS2 | P1 | P2 |
|---|---|---|---|---|---|---|---|---|
| Signaling information to UE1 | × | × | ○ | ○ | ○ | ○ | ○ | ○ |
| Signaling information to UE2 | × | × | × | ○ | × | ○ | × | ○ |

FIG. 7C

23

| | W1 | W2 | Rank1 | Rank2 | MCS1 | MCS2 | P1 | P2 |
|---|---|---|---|---|---|---|---|---|
| Signaling information to UE1 | × | ○ | × | ○ | ○ | ○ | ○ | ○ |
| Signaling information to UE2 | ○ | × | ○ | × | ○ | ○ | ○ | ○ |

FIG. 8A

| | W1 | W2 | Rank1 | Rank2 | MCS1 | MCS2 | P1 | P2 |
|---|---|---|---|---|---|---|---|---|
| Jointly encoded and signaled to both UE1 & UE2 | ○ | ○ | ○ | ○ | ○ | ○ | ○ | ○ |

FIG. 8B

EP 3 282 609 A1

| Index | MCS1 | MCS2 | P1 | P2 |
|-------|------|------|------|------|
| Entry#1 | 16QAM | 16QAM | 0.3 | 0.7 |
| Entry#2 | 16QAM | QPSK | 0.35 | 0.65 |
| Entry#3 | QPSK | QPSK | 0.25 | 0.75 |
| Entry#4 | 64QAM | QPSK | 0.2 | 0.8 |

FIG. 9A

| Index | W1 | W2 | Rank1 | Rank2 |
|-------|------|------|-------|-------|
| Entry#1 | W1 | W1 | 1 | 1 |
| Entry#2 | W3 | W1 | 2 | 1 |
| Entry#3 | W3 | W1 | 2 | 1 |
| Entry#4 | W2 | W2 | 2 | 2 |

FIG. 9B

FIG. 10

FIG. 11

101

101

10

102 AMPLIFYING SECTION

102 AMPLIFYING SECTION

103 TRANSMISSION /RECEPTION SECTION

103 TRANSMISSION /RECEPTION SECTION

104 BASEBAND SIGNAL PROCESSING SECTION

105 CALL PROCESSING SECTION

106 TRANSMISSION PATH INTERFACE

TO HIGHER STATION APPARATUS 30 OR ANOTHER RADIO BASE STATION 10

TRANSMISSION PATH
INTERFACE 106

CONTROL
SECTION
301

TRANSMISSION
SIGNAL
GENERATING
SECTION
302

MAPPING
SECTION
303

TRANSMISSION/
RECEPTION
SECTIONS 103

RECEIVED
SIGNAL
PROCESSING
SECTION
304

TRANSMISSION/
RECEPTION
SECTIONS 103

MEASUREMENT
SECTION
305

104

FIG. 12

EP 3 282 609 A1

FIG. 13

FIG. 14

204

401 CONTROL SECTION

402 TRANSMISSION SIGNAL GENERATING SECTION

403 MAPPING SECTION

404 RECEIVED SIGNAL PROCESSING SECTION

405 MEASUREMENT SECTION

TRANSMISSION/ RECEPTION SECTIONS 203

TRANSMISSION/ RECEPTION SECTIONS 203

## INTERNATIONAL SEARCH REPORT

| International application No. |
|---|
| PCT/JP2016/061492 |

**A. CLASSIFICATION OF SUBJECT MATTER**
*H04J99/00*(2009.01)i, *H04B7/04*(2006.01)i, *H04W16/28*(2009.01)i

According to International Patent Classification (IPC) or to both national classification and IPC

**B. FIELDS SEARCHED**

Minimum documentation searched (classification system followed by classification symbols)
H04J99/00, H04B7/04, H04W16/28

Documentation searched other than minimum documentation to the extent that such documents are included in the fields searched
Jitsuyo Shinan Koho          1922–1996   Jitsuyo Shinan Toroku Koho   1996–2016
Kokai Jitsuyo Shinan Koho    1971–2016   Toroku Jitsuyo Shinan Koho   1994–2016

Electronic data base consulted during the international search (name of data base and, where practicable, search terms used)
IEEE Xplore, CiNii

**C. DOCUMENTS CONSIDERED TO BE RELEVANT**

| Category* | Citation of document, with indication, where appropriate, of the relevant passages | Relevant to claim No. |
|---|---|---|
| A | JP 2013-247513 A  (Sharp Corp.),<br>09 December 2013 (09.12.2013),<br>& US 2015/0171983 A1    & WO 2013/176042 A1<br>& EP 2858281 A1          & CN 104321990 A | 1-10 |
| A | JP 2014-131201 A  (NTT Docomo Inc.),<br>10 July 2014 (10.07.2014),<br>& US 2015/0358064 A1    & WO 2014/104114 A1<br>& CN 104871464 A | 1-10 |
| A | JP 2014-154962 A  (NTT Docomo Inc.),<br>25 August 2014 (25.08.2014),<br>& US 2016/0029350 A     & WO 2014/122994 A1<br>& EP 2955952 A1 | 1-10 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>31 May 2016 (31.05.16) | Date of mailing of the international search report<br>07 June 2016 (07.06.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/061492

C (Continuation).   DOCUMENTS CONSIDERED TO BE RELEVANT

| Category* | Citation of document, with indication, where appropriate, of the relevant passages | Relevant to claim No. |
|---|---|---|
| A | Motivation for Enhanced Multiuser Transmissions and Network Assisted Interference Cancellation for LTE, 3GPP TSG-RAN#66 RP-141895, 2014.12.11, pp.1-7 | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015080320 A